# EUROPÄISCHE PATENTANMELDUNG

(11) **EP 3 208 783 A1**
(43) Veröffentlichungstag der Anmeldung: **23.08.2017**
(21) Anmeldenummer: 17150259.4
(22) Anmeldetag: 04.01.2017
(51) Int. Cl.: G07F 7/06, B07C 5/12, B65G 47/71, B65G 21/20, B65G 47/68, B65G 47/51

(54) **LEERGUT-SORTIEREINRICHTUNG UND LEERGUT-RÜCKNAHMESYSTEM**

(30) Priorität: 19.02.2016 DE 102016102944
(71) Anmelder: Wincor Nixdorf International GmbH, 33106 Paderborn (DE)
(72) Erfinder: SCHRÖDER, Berthold, 98693 Illmenau (DE)
(74) Vertreter: Viering, Jentschura & Partner mbB Patent- und Rechtsanwälte

(57) **Zusammenfassung**

Leergut-Sortiereinrichtung (1) und Leergut-Rücknahmesystem, wobei die Leergut-Sortiereinrichtung (1) aufweist: einen Leergut-Sortiertisch (3) mit einer Tischfläche (5), einem Leergut-Zuführabschnitt (7), dem Leergut (11) unterschiedlichen Leerguttyps zuführbar ist, und einem Leergut-Abführabschnitt (13), wobei der Leergut-Abführabschnitt (13) eine Abführabschnitt-Unterteileinrichtung (15) mit wenigstens einer Abführabschnitt-Trennwand (17) aufweist, von welcher der Leergut-Abführabschnitt (13) in wenigstens eine erste und eine zweite Leergut-Sammelgasse (19, 21) unterteilt ist, die durch die wenigstens eine Abführabschnitt-Trennwand (17) voneinander getrennt sind, eine Leergut-Fördereinrichtung (33), welche an dem Leergut-Sortiertisch (3) installiert ist und welche derart ausgebildet ist, dass von der Leergut-Fördereinrichtung (33) das dem Leergut-Zuführabschnitt (7) zugeführte Leergut (11) von dem Leergut-Zuführabschnitt (7) zu dem Leergut-Abführabschnitt (13) entlang einer Überführ-Förderrichtung (F) überführbar ist, eine Leergut-Leiteinrichtung (41) mit einem bewegbaren Leergut-Leitelement (43), welches bezüglich der Überführ-Förderrichtung (F) stromaufwärts der Leergut-Sammelgassen (19, 21) an dem Leergut-Sortiertisch (3) angeordnet ist und welches zumindest in eine erste Leitposition (L1), die der ersten Leergut-Sammelgasse (19) zugeordnet ist, und eine zweite Leitposition (L2), die der zweiten Leergut-Sammelgasse (21) zugeordnet ist, bewegbar ausgebildet ist.

## Beschreibung

Die Erfindung betrifft eine Leergut-Sortiereinrichtung und ein Leergut-Rücknahmesystem zum automatischen Sortieren von Leergut.

Leergut, welches z.B. in Form von Gebinden vorliegt, wie z.B. Mehrwegflaschen, beispielsweise Kunststoff- und Glasflaschen, wird von Verbrauchern in der Regel einzeln mittels Leergutrücknahmeautomaten, welche z.B. in Supermärkten aufgestellt sind, zurückgegeben. Herkömmlicherweise wird das zurückgegebene Leergut in Form von unterschiedlichen und miteinander vermischten Flaschen von den Leergutrücknahmeautomaten auf einen Leergut-Sortiertisch ausgeben und wird anschließend von Mitarbeitern der Leergutrücknahmestelle manuell in Leergutkisten einsortiert, sodass sortenreine Leergutkisten zu einer Leergutverwertungsstelle transportiert werden können. Jedoch ist die manuelle Leergutsortierung ausgehend von einer Ansammlung von unterschiedlichen und miteinander vermischten Flaschen zeitaufwendig und ist zugleich das manuelle Einsortieren des Leerguts in die Leergutkisten, um sortenreine Leergutkisten zu erhalten, mit einem großen Fehlerpotential behaftet (nicht sortenreine Leergutkisten stellen für die Leergutrücknahmestelle ein Wertverlust dar).

Es werden eine Leergut-Sortiereinrichtung und ein Leergut-Rücknahmesystem geschaffen, welche eine automatische Sortierung von vermischtem, unterschiedlichem Leergut, welches z.B. in wie oben beschriebener Form vorliegt, in unterschiedliche (z.B. sortenreine) Leergutfraktionen ermöglichen.

Es werden eine Leergut-Sortiereinrichtung gemäß Anspruch 1 und ein Leergut-Rücknahmesystem gemäß Anspruch 13 bereitgestellt. Weitere Ausführungsformen der Leergut-Sortiereinrichtung und des Leergut-Rücknahmesystems sind in den jeweiligen abhängigen Ansprüchen beschrieben.

Eine Leergut-Sortiereinrichtung gemäß einer beispielhaften Ausführungsform zur automatischen Sortierung von Leergut kann einen Leergut-Sortiertisch, eine Leergut-Fördereinrichtung, eine Leergut-Leiteinrichtung und eine Steuereinrichtung aufweisen, wobei das Leergut ein einzelner (zumindest im Wesentlichen) leerer Getränkebehälter wie eine Mehrwegflasche, beispielsweise eine Kunststoff- oder Glasflasche, oder eine Ansammlung von Getränkebehältern ist. Mittels der Leergut-Sortiereinrichtung kann das Leergut z.B. für eine manuelle Sortierung durch Mitarbeiter einer Leergutannahmestelle (beispielsweise einem Super- oder Getränkemarkt) in unterschiedliche Leergutfraktionen vorsortiert werden, sodass die Mitarbeiter z.B. vom Leergut-Sortiertisch aus das Leergut in Leergutkisten einsortieren können, und/oder kann das Leergut bereits sortenrein für eine sich anschließende, z.B. automatische, Handhabung sortiert werden.

Der Leergut-Sortiertisch der Leergut-Sortiereinrichtung kann eine Tischfläche, einen Leergut-Zuführabschnitt und einen Leergut-Abführabschnitt aufweisen. Die Tischfläche ist z.B. rechteckig oder rund und ist z.B. langgestreckt. Dem Leergut-Zuführabschnitt, welcher z.B. an einem Randbereich (z.B. einer Schmalseite) der Tischfläche angeordnet ist und sich z.B. über eine gesamte Breite der Tischfläche erstreckt oder z.B. nur lokal begrenzt, bspw. in einem mittleren Bereich am Rand der Tischfläche, angeordnet ist, ist Leergut unterschiedlichen Leerguttyps zuführbar, beispielsweise automatisch (d.h., Leergut kann z.B. über die gesamte / an der gesamten Breite des Leergut-Sortiertischs auf diesen zugeführt werden, oder eben nur in einem begrenzten Bereich). Der Leergut-Abführabschnitt weist z.B. eine Abführabschnitt-Unterteileinrichtung mit wenigstens einer Abführabschnitt-Trennwand (welche z.B. als ein Paneel, als eine Leiste oder als ein Band ausgebildet sein kann) auf, von welcher der Leergut-Abführabschnitt in wenigstens eine erste und eine zweite Leergut-Sammelgasse unterteilt ist, die durch die wenigstens eine Abführabschnitt-Trennwand voneinander getrennt sind (z.B. sind die Leergut-Sammelgassen, soweit sie nicht von einer Abführabschnitt-Trennwand / Abführabschnitt-Trennwänden begrenzt sind, durch die Außengeometrie des Leergut-Sortiertischs begrenzt).

Die Leergut-Fördereinrichtung (z.B. ein Förderband im Falle z.B. eines rechteckigen Leergut-Sortiertischs oder z.B. eine Drehscheibe / ein Drehtisch im Falle z.B. eines runden Leergut-Sortiertischs) der Leergut-Sortiereinrichtung kann an dem Leergut-Sortiertisch (z.B. auf der Tischfläche des Leergut-Sortiertischs) installiert sein und sich zwischen dem Leergut-Zuführabschnitt und dem Leergut-Abführabschnitt erstrecken und kann derart ausgebildet sein, dass von der Leergut-Fördereinrichtung das dem Leergut-Zuführabschnitt zugeführte Leergut von dem Leergut-Zuführabschnitt zu dem Leergut-Abführabschnitt entlang einer Überführ-Förderrichtung überführbar ist. Die Überführung des Leerguts erfolgt z.B. mit einer Geschwindigkeit (z.B. einer Förderbandgeschwindigkeit oder einer dazu korrespondierenden Drehtisch-Rotationsgeschwindigkeit) von z.B. etwa 100 mm/s bis etwa 450 mm/s, z.B. optional etwa 150 mm/s bis etwa 225 mm/s.

Die Leergut-Leiteinrichtung der Leergut-Sortiereinrichtung kann ein bewegbares Leergut-Leitelement haben, welches bezüglich der Überführ-Förderrichtung stromaufwärts der Leergut-Sammelgassen an dem Leergut-Sortiertisch (z.B. senkrecht zur Tischfläche oberhalb der Leergut-Fördereinrichtung) angeordnet ist und welches zumindest in eine erste Leitposition, die der ersten Leergut-Sammelgasse zugeordnet ist, und eine zweite Leitposition, die der zweiten Leergut-Sammelgasse zugeordnet ist, bewegbar ausgebildet ist, um das mittels der Leergut-Fördereinrichtung auf dem Leergut-Sortiertisch in die Überführ-Förderrichtung geförderte Leergut selektiv der ersten und der zweiten Leergut-Sammelgasse zu zuleiten.

Die Steuereinrichtung der Leergut-Sortiereinrichtung kann z.B. einen Sensor (z.B. eine Kamera und/oder einen Barcodescanner) aufweisen, mittels dessen der jeweilige Leerguttyp des dem Leergut-Zuführabschnitt zugeführten Leerguts automatisch erfassbar ist, und kann mit der Leergut-Leiteinrichtung verbunden sein und derart eingerichtet sein, um die Bewegung des Leergut-Leitelements in dessen erste und zweite Leitposition in Abhängigkeit von dem erfassten Leerguttyp zu steuern, um dadurch das Leergut Leerguttyp-zugeordnet selektiv der ersten Leergut-Sammelgasse und der zweite Leergut-Sammelgasse zu zuleiten.

Das Leergut-Leitelement kann z.B. als ein Paneel (z.B. als eine Platte oder als ein plattenförmiges Gitterelement) z.B. mit (äußeren) einander gegenüberliegenden (z.B. keilförmig entgegen der Überführ-Förderrichtung aufeinander zulaufenden) Paneelflächen ausgebildet sein, die sich zumindest im Wesentlichen senkrechet zur Tischfläche erstrecken und welche als Leergut-Leitflächen zum Kontaktieren und Leiten des Leerguts dienen, wobei das Paneel mit seinen Paneelflächen zumindest im Wesentlichen quer zur Überführ-Förderrichtung bewegbar ist. Zum Beispiel sind in den beiden Leitpositionen die eine oder die andere Paneelfläche mit einem Winkel zur Überführ-Förderrichtung (stromaufwärts) orientiert, wobei der Winkel vorbestimmt ist, z.B. in etwa in einem Bereich von 5° bis 40°, z.B. optional in etwa in einem Bereich von 10° bis 25°, oder z.B. abhängig von einer Transportgeschwindigkeit der Leergut-Fördereinrichtung von der Steuereinrichtung einstellbar ist (wobei die Transportgeschwindigkeit der Leergut-Fördereinrichtung z.B. von einem mit der Steuereinrichtung verbundenen Sensor erfasst werden kann). Zudem kann die Bewegung des Leergut-Leitelements auch erfolgen, wenn es in diesem Moment von der Leergut-Fördereinrichtung daran vorbeitransportiertes Leergut kontaktiert, um das Leergut aktiv auf der Leergut-Fördereinrichtung zu verschieben. Das Leergut-Leitelement kann auch als Leitblech realisiert sein. Die Verstellbarkeit der Das Leergut-Leitelemente (beispielsweise der Leitbleche) kann sehr schnell erfolgen, beispielsweise mit einer Taktrate < 3 Sek.

Weiter kann z.B. das Leergut-Leitelement in einer Draufsicht auf die Tischfläche gesehen langgestreckt mit einem dem Leergut-Zuführabschnitt zugewandten, vorderen Leitelement-Endabschnitt (welcher z.B. im Wesentlichen keilförmig/spitz zulaufend geformt ist) und einem dem Leergut-Abführabschnitt zugewandten, hinteren Leitelement-Endabschnitt ausgebildet sein.

Zudem kann z.B. das Leergut-Leitelement um eine Schwenkachse, die sich zumindest im Wesentlichen senkrecht zur Tischfläche erstreckt, (z.B. durch die Leergut-Leiteinrichtung) schwenkbar angebracht sein, womit das Leergut-Leitelement (z.B. durch einen in der Leergut-Leiteinrichtung angebrachten Elektromotor) in eine der ersten Leitposition zugehörige Schwenkposition und in eine der zweiten Leitposition zugehörige Schwenkposition schwenkbar ist. Die Schwenkachse kann zudem z.B. von der Leergut-Leiteinrichtung parallel zur Tischfläche verschiebbar sein.

Die Schwenkachse des Leergut-Leitelements kann z.B. in einem Abstand vom vorderen Leitelement-Endabschnitt und zwischen dem vorderen Leitelement-Endabschnitt und dem hinteren Leitelement-Endabschnitt, optional benachbart zu und/oder in dem hinteren Leitelement-Endabschnitt, angeordnet sein.

Die Leergut-Leiteinrichtung kann z.B. eingerichtet sein, um das Leergut-Leitelement in einer Richtung parallel zur Tischfläche linear zu bewegen (z.B. quer zur Überführ-Förderrichtung, z.B. durch einen Elektromotor), um das Leergut-Leitelement in die erste und die zweite Leitposition zu bewegen.

Die Abführabschnitt-Trennwand zwischen den Leergut-Sammelgassen kann z.B. parallel zur Tischfläche durch die Steuereinrichtung gesteuert bewegbar sein (z.B. durch einen am stromabwärts gelegenen Ende der Abführabschnitt-Unterteileinrichtung angeordneten Elektromotor, oder z.B. durch eine Kupplung des stromaufwärts gelegenen Endes der Abführabschnitt-Trennwand mit der verschiebbaren Schwenkachse des Leergut-Leitelements), sodass eine zugeordnete Leergut-Sammelgassengröße variierbar ist (z.B. kann eine Breite quer zur Überführ-Förderrichtung, ein Winkel zur Überführ-Förderrichtung wie auch eine Länge entlang der Überführ-Fördereinrichtung variierbar sein). Dadurch ist eine Aufnahmemenge der jeweiligen Leergut-Sammelgasse auf eine Menge der (erwarteten) zu sortierenden Leerguttypen (Fraktionen) anpassbar. Die Abführabschnitt-Trennwand ist hier z.B. um eine sich zumindest im Wesentlichen zur Tischfläche senkrecht erstreckende Einstellachse schwenkbar.

Die Leergut-Sortiereinrichtung kann z.B. mehrere, z.B. drei, vier, fünf, sechs oder mehr, Leergut-Sammelgassen im Leergut-Abführabschnitt (z.B. zumindest im Wesentlichen entlang der Überführ-Förderrichtung ausgebildet) benachbart zueinander ausgebildet haben und durch zugehörige Abführabschnitt-Trennwände, von welchen jeweils eine Abführabschnitt-Trennwand zwischen zwei benachbarten Leergut-Sammelgassen ausgebildet ist, voneinander getrennt haben. Auf diese Art ist eine größere Anzahl von Lehrguttypen in Leergutfraktionen sortierbar.

Die Leergut-Leiteinrichtung kann z.B. mehrere, z.B. zwei, drei, vier fünf oder mehr, Leergut-Leitelemente aufweisen.

Die Abführabschnitt-Trennwände können z.B. einen vorderen Trennwand-Endabschnitt aufweisen, der in der Überführ-Förderrichtung gesehen dem Leergut-Zuführabschnitt zugewandt ist, wobei eine erste Anzahl (z.B. zwei) von Leergut-Leitelementen in der Überführ-Förderrichtung gesehen stromaufwärts benachbart (z.B. direkt davor / angrenzend oder stromaufwärts in Abstand zum vorderen Trennwand-Endabschnitt) zu dem oder den vorderen Trennwand-Endabschnitten einer Anzahl (z.B. vier) von Abführabschnitt-Trennwänden angeordnet ist, und wobei optional die erste Anzahl von Leergut-Leitelementen gleich der Anzahl von Abführabschnitt-Trennwänden ist.

Die Leergut-Sortiereinrichtung kann z.B. bezüglich der Überführ-Förderrichtung stromaufwärts der ersten Anzahl (z.B. zwei) von Leergut-Leitelementen eine zweite Anzahl (z.B. eins) von Leergut-Leitelementen angeordnet haben, wobei optional die zweite Anzahl von Leergut-Leitelementen, quer zur Überführ-Förderrichtung gesehen, zwischen seitlich äußersten Leergut-Leitelementen (z.B. mittig) angeordnet ist. Auf diese Art kann Leergut in eine größere Anzahl von Leergut-Sammelgassen sortierbar sein und/oder von einem Rand (in Querrichtung zur Überführ-Förderrichtung) zum anderen Rand der Leergut-Fördereinrichtung verschiebbar sein.

Zudem kann z.B. die Leergut-Sortiereinrichtung im Leergut-Zuführabschnitt und/oder in einem Bereich benachbart zu dem Leergut-Leitelement eine Unterdruckerzeugungsvorrichtung (z.B. unterhalb der Leergut-Fördereinrichtung) bereitgestellt haben, von welcher ein Unterdruck erzeugbar ist, der durch die (z.B. luftdurchlässige) Leergut-Fördereinrichtung hindurch auf das darauf transportierte Leergut wirkt, um das Leergut in Richtung zur Tischfläche hin anzusaugen. Dies kann dazu dienen, um das Leergut, z.B. eine stehende Flasche, beim Vorbeitransport an einem Leergut-Leitelement zu stabilisieren, da die Falsche an das Leergut-Leitelement anhaften kann (z.B. durch etwaige an der Falsche anhaftende, klebrige Flüssigkeitsreste).

Die Unterdruckerzeugungsvorrichtung kann z.B. mit der Steuereinrichtung verbunden sein und der von der Unterdruckerzeugungsvorrichtung erzeugte Unterdruck kann von der Steuereinrichtung in Abhängigkeit von der Transportgeschwindigkeit der Leergut-Fördereinrichtung, welche von einem Sensor der Steuereinrichtung erfassbar ist, und/oder vom Leerguttyp steuerbar sein. Dieses gesteuerte Ansaugen der Flasche kann dazu dienen, um die Transportgeschwindigkeit der Leergut-Fördereinrichtung zu steigern, da in Bereichen, in welchen eine Umkippgefahr der Flasche groß ist (z.B. im Aufstellbereich im Leergut-Zuführabschnitt und im Leergut-Leitelement-Kontaktbereich), die Flasche durch das Ansaugen zusätzlich stabilisiert ist.

Ein Leergut-Rücknahmesystem gemäß einer beispielhaften Ausführungsform kann z.B. eine wie oben beschriebene Leergut-Sortiereinrichtung und einen Leergutrücknahmeautomaten aufweisen, in welchen hinein Leergut manuell eingebbar ist (z.B. durch einen Verbraucher) und von welchem das eingegebene Leergut zu dem Leergut-Zuführabschnitt des Leergut-Sortiertischs hin automatisch zuführbar ist. Der Leergutrücknahmeautomat kann ein herkömmlicher Leergutrücknahmeautomat sein, wie er zur Rücknahme von Mehrwegflaschen gebräuchlich ist, und ist hier nicht detailliert beschrieben.

Bei dem Leergut-Rücknahmesystem kann z.B. der Sensor der Leergut-Sortiereinrichtung zur Erfassung des Leerguttyps von einer Leergut-Erfassungseinrichtung (z.B. einer Kameraeinrichtung und/oder einem Barcode-Scanner) gebildet sein, welche im Leergutrücknahmeautomaten angeordnet ist.

Das Leergut-Rücknahmesystem kann weiter z.B. mit einer Datenbank bereitgestellt sein, die mit der Steuereinrichtung verbunden ist und/oder verbindbar ist und in der Kenngrößen (z.B. Abmessungen, Gewicht, Farbe, Erkennungszeichen, etc.) der verschiedenen Leerguttypen (Mehrwegflaschen) hinterlegt sind, mittels deren von der Steuereinrichtung der Leerguttyp ermittelbar ist (z.B. durch Vergleichen der in der Datenbank vorhandenen Leerguttypen mit dem jeweils vom Sensor erfassten Leerguttyp).

Das Leergut-Rücknahmesystem kann z.B. die Leerguttyp-Zuordnung zu den einzelnen Leergut-Sammelgassen anhand einer Häufigkeitsverteilung des zugeführten Leerguts durchführen, z.B. aber auch anhand von Handhabungskriterien zur manuellen Einsortierung, beispielsweise der Flaschengröße.

Außerdem kann das Leergut-Rücknahmesystem z.B. mehrere Leergutrücknahmeautomaten aufweisen, die gemeinsam Leergut an die Leergut-Sortiereinrichtung ausgeben.

Ferner kann das Leergut-Rücknahmesystem z.B. mit einer Leergut-Transporteinrichtung bereitgestellt sein, die zwischen dem Leergutrücknahmeautomaten und dem Leergut-Zuführabschnitt des Leergut-Sortiertischs und/oder zwischen dem Leergut-Abführabschnitt des Leergut-Sortiertischs und einer Leergut-Sammeleinrichtung (z.B. einem Leergut-Sammelbehälter) angeordnet ist, um das Leergut vom Leergutrücknahmeautomaten zum Leergut-Sortiertisch und/oder vom Leergut-Sortiertisch zur Leergut-Sammeleinrichtung automatisch zu transportieren, wobei die Leergut-Transporteinrichtung aufweisen kann: zumindest eine erste und eine zweite Leergut-Transportbahn (z.B. ein Förderband) zum Transport des Leerguts entlang einer jeweiligen Bahn-Transportrichtung, welche jeweils eine Leergut-Transportfläche aufweisen, auf welcher das Leergut transportierbar ist, wobei ein Leergut-Überführabschnitt zwischen der ersten und der zweiten Transportbahn ausgebildet ist, über welchen Leergut von der ersten zu der zweiten Transportbahn überführbar ist, ein stationäres oder von der Steuereinrichtung gesteuert bewegbares Umlenkelement (z.B. ein Paneel), welches im Bereich des Leergut-Überführabschnitts angeordnet ist und mit einer Umlenkleitfläche zum Kontaktieren und Umlenken des Leerguts von der ersten zu der zweiten Transportbahn ausgebildet ist (wobei z.B. die Leitfläche im Wesentlichen senkrecht zu einer der Leergut-Transportflächen orientiert ist und sich von der ersten Transportbahn zu der zweiten Transportbahn unter Ausbildung eines Winkels zur Bahn-Transportrichtung der ersten Transportbahn erstreckt), und eine Unterdruckbereitstellungsvorrichtung, welche benachbart zum Umlenkelement angeordnet ist und von welcher ein Unterdruck erzeugbar ist (z.B. in einem Bereich, in welchem die Flaschen die Transportbahn wechseln und/oder mit dem Umlenkelement in Kontakt sind), der (zumindest) durch die (z.B. luftdurchlässige) zweite Transportbahn hindurch auf das darauf transportierte Leergut wirkt, um das Leergut in Richtung zur Leergut-Transportfläche der zweiten Transportbahn hin anzusaugen. Hierbei haben das Umlenkelement und die Unterdruckbereitstellungsvorrichtung z.B. eine ähnliche Gestalt und Funktion wie das Leergut-Leitelement bzw. die Unterdruckerzeugungsvorrichtung der Leergut-Sortiereinrichtung.

Ausführungsbeispiele der Erfindung sind in den Figuren dargestellt und werden im Folgenden näher erläutert.

Es zeigen:
- Figur 1: eine schematische Draufsicht auf eine Leergut-Sortiereinrichtung gemäß einer beispielhaften Ausführungsform mit einem schwenkbaren Leergut-Leitelement;
- Figur 2: eine schematische Draufsicht auf eine weitere Leergut-Sortiereinrichtung gemäß einer beispielhaften Ausführungsform mit einem verschiebbaren Leergut-Leitelement;
- Figur 3: eine schematische Draufsicht auf eine weitere Leergut-Sortiereinrichtung gemäß einer beispielhaften Ausführungsform mit mehreren Leergut-Leitelementen;
- Figur 4: eine schematische Draufsicht auf eine Leergut-Rücknahmevorrichtung gemäß einer beispielhaften Ausführungsform; und
- Figur 5: zwei schematische Detail-Draufsichten (Figur 5A und 5B) auf zwei Leergut-Transporteinrichtungen, welche bei der Leergut-Rücknahmevorrichtung aus der Figur 4 verwendet werden.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekuppelt" verwendet zum Beschreiben sowohl einer direkten als auch einer indirekten Verbindung, eines direkten oder indirekten Anschlusses sowie einer direkten oder indirekten Kupplung. In den Figuren werden identische oder ähnliche Elemente mit identischen Bezugszeichen versehen, soweit dies zweckmäßig ist.

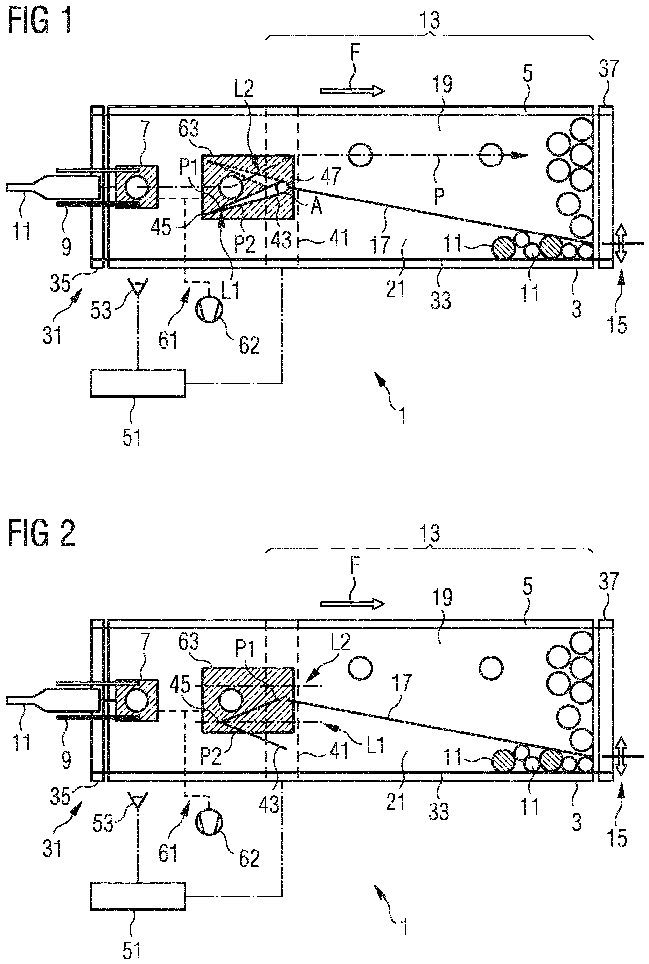

Die Figur 1 zeigt schematisch eine beispielhafte Leergut-Sortiereinrichtung 1 in einer Draufsicht, wobei die Leergut-Sortiereinrichtung 1 aufweist: einen rechteckigen Leergut-Sortiertisch 3 mit einer Tischfläche 5, einem Leergut-Zuführabschnitt 7, welcher an einer linken Schmalseite des Leergut-Sortiertischs 3 in einem mittleren Bereich davon angeordnet ist und dem ausgehend von einem Leergutrücknahmeautomaten (nicht gezeigt) über eine Leergutaufrichteinrichtung 9 (einen Flaschenaufsteller, welcher vom Leergutrücknahmeautoamten ausgegebene Flaschen senkrecht zur Tischfläche 5 orientiert und im Leergut-Zuführabschnitt 7 abstellt) Leergut 11 unterschiedlichen Leerguttyps, in diesem Fall drei unterschiedliche Flaschentypen, zuführbar ist, und einem Leergut-Abführabschnitt 13, wobei der Leergut-Abführabschnitt 13 eine Abführabschnitt-Unterteileinrichtung 15 mit einer Abführabschnitt-Trennwand 17 und einer Stellvorrichtung (nicht gezeigt) aufweist, von welcher Abführabschnitt-Trennwand 17 der Leergut-Abführabschnitt 13 in eine erste und eine zweite Leergut-Sammelgasse 19, 21 unterteilt ist, die durch die Abführabschnitt-Trennwand 17 voneinander getrennt sind. Die Abführabschnitt-Trennwand 17 ist entlang der rechten Schmalseite des Leergut-Sortiertischs 3 durch die Stellvorrichtung automatisch verstellbar.

Weiter weist die Leergut-Sortiereinrichtung 1 eine Leergut-Fördereinrichtung 31 auf, die als ein Förderband 33 zwischen zwei an den (einander entgegengesetzten) Schmalseiten des Leergut-Sortiertisch 3 angebrachten Tragrollen 35, 37 ausgebildet ist, wobei sich das Förderband 33 auf der Tischfläche 5 zwischen dem Leergut-Zuführabschnitt 7 und dem Leergut-Abführabschnitt 13 erstreckt. Das Förderband 33 überführt das Leergut 11, welches innerhalb des Leergut-Zuführabschnitts 7 auf das Förderband 33 aufgestellt wird, entlang einer Überführ-Förderrichtung F (von der linken zur rechten Schmalseite des Leergut-Sortiertischs 3) zu dem Leergut-Abführabschnitt 13 und läuft unterhalb der Tischfläche 5 wieder zurück.

Außerdem weist die Leergut-Sortiereinrichtung 1 eine Leergut-Leiteinrichtung 41 mit einem bewegbaren Leergut-Leitelement 43 auf, welches bezüglich der Überführ-Förderrichtung F stromaufwärts der Leergut-Sammelgassen 19, 21 angeordnet ist, um das mittels des Förderbands 33 auf dem Leergut-Sortiertisch 3 in die Überführ-Förderrichtung F geförderte Leergut 11 selektiv der ersten und der zweiten Leergut-Sammelgasse 19, 21 zu zuleiten. Die Leergut-Leiteinrichtung 41 ist z.B. derart über dem Sortiertisch 3 an diesem abgestützt (z.B. in Form einer Brücke, welche den Leergut-Sortiertisch 3 quer zur Überführ-Förderrichtung überspannt), sodass das Leergut 11 unter der Leergut-Leiteinrichtung 41 hindurch mittels des Förderbands 33 transportierbar ist (die Leergut-Leiteinrichtung 41 ist in der Figur 1 zur Übersichtlichkeit strichliert dargestellt). Das Leergut-Leitelement ist als spitz zulaufendes, keilförmiges Paneel mit einander gegenüberliegenden Paneelflächen P1, P2 ausgebildet, die sich senkrechet zur Tischfläche 5 erstrecken und welche als Leergut-Leitflächen zum Kontaktieren und Leiten des Leerguts 11 dienen. Das Leergut-Leitelement 43 ist weiter (in der gezeigten Draufsicht) langgestreckt mit einem dem Leergut-Zuführabschnitt 7 zugewandten, vorderen Leitelement-Endabschnitt 45 und einem dem Leergut-Abführabschnitt 13 zugewandten, hinteren Leitelement-Endabschnitt 47 ausgebildet. Im hinteren Leitelement-Endabschnitt 47 ist eine Schwenkachse A ausgebildet, die sich senkrecht zur Tischfläche 5 erstreckt, womit das Leergut-Leitelement 43 durch einen Elektromotor (nicht gezeigt) der Leergut-Leiteinrichtung 41 in eine zu einer ersten Leitposition L1 zugehörige Schwenkposition und in eine der zweiten Leitposition L2 (der Umriss des Leergut-Leitelements 43 ist in der zweiten Leitposition L2 in der Figur 1 gepunktet dargestellt) zugehörige Schwenkposition schwenkbar ist. Die erste Leitposition L1 ist der ersten Leergut-Sammelgasse 19 zugeordnet, und die zweite Leitposition L2 ist der zweiten Leergut-Sammelgasse 21 zugeordnet, wobei ein Ablenk- bzw. Anprallwinkel des Leerguts 11 in der ersten und der zweiten Leitposition L1, L2 bezogen auf die Überführ-Förderrichtung F z.B. in etwa 5° bis 40°, z.B. optional etwa 10° bis 25° ist. Beispielsweise kann die Schwenkachse A z.B. auch mittig zwischen dem vorderen und dem hinteren Leitelement-Endabschnitt 45, 47 angeordnet sein, sodass bei einem Schwenken (Drehen) des Leergut-Leitelements 43 der vordere und der hintere Leitelement-Endabschnitt 45, 47 gleichzeitig entgegengesetzt quer zu Überführ-Förderrichtung F bewegt werden, sodass in einem Fall von beispielsweise drei oder mehr Leergut-Sammelgassen durch ein einzelnes, derart geformtes Leergut-Leitelement 43 das Leergut 11 in jede der Leergut-Sammelgassen zuführbar ist, indem der hintere Leitelement-Endabschnitt 47 quer zur Überführ-Förderrichtung F durch das Schwenken des Leergut-Leitelements 43 vor allen Leergut-Sammelgassen positionierbar ist.

Darüber hinaus weist die Leergut-Sortiereinrichtung 1 eine Steuereinrichtung 51 auf, welche einen durch z.B. eine Kamera gebildeten Sensor 53 aufweist, mittels dessen der jeweilige Leerguttyp des dem Leergut-Zuführabschnitt 7 zugeführten Leerguts 11 automatisch erfassbar ist. Die Steuereinrichtung 51 ist mit der Leergut-Leiteinrichtung 41 verbunden (als doppelpunkt-strichlierte Linie in der Figur 1 dargestellt) und ist eingerichtet, um die Schwenkbewegung des Leergut-Leitelements 43 in dessen erste und zweite Leitposition L1, L2 in Abhängigkeit von dem erfassten Leerguttyp zu steuern, um dadurch das Leergut 11 Leerguttyp-zugeordnet selektiv der ersten Leergut-Sammelgasse 19 und der zweiten Leergut-Sammelgasse 21 zuzuleiten.

Zudem weist die Leergut-Sortiereinrichtung 1 eine Unterdruckerzeugungsvorrichtung 61 auf, z.B. eine Unterdruckpumpe 62 und zwei mit dieser verbundene Unterdruckglocken (beide nicht gezeigt). Hier ist eine Unterdruckglocke unterhalb der Tischfläche 5 im Bereich des Leergut-Zuführabschnitts 7 und die andere Unterdruckglocke im Bereich des Leergut-Leitelements 41 (im Weiteren kurz als Leitbereich 63 bezeichnet) angebracht und erzeugt in diesen Bereichen einen jeweiligen Unterdruck, der durch das Förderband 33 hindurch (welches z.B. perforiert ist) auf das darauf transportierte Leergut 11 wirkt, um das Leergut 11 in Richtung zur Tischfläche 5 hin anzusaugen und auf dem Förderband 33 zu stabilisieren.

Wie bereits oben beschrieben weist die Steuereinrichtung 51 eine Kamera 53 als Sensor zur Leerguttyperfassung auf. Weiter kann die Steuereinrichtung 51 z.B. mit einem Förderbandgeschwindigkeitssensor zum Erfassen einer Förderbandgeschwindigkeit und mit z.B. einem Drucksensor zur Erfassung des von der Unterdruckerzeugungsvorrichtung 61 erzeugten Unterdrucks bereitgestellt sein, um in Abhängigkeit der erfassten Größen automatisch das Förderband 33, die Leergut-Leiteinrichtung 41 und/oder die Unterdruckerzeugungsvorrichtung 61 zu steuern.

In der Figur 1 ist weiter ein beispielhafter Bewegungspfad P einer Flasche (Leergut 11) mittels eines punkt-strichlierten Pfeils dargestellt: die Flasche wird im Leergut-Zuführabschnitt 7 auf das Förderband 33 aufgesetzt, vom Förderband 33 in Richtung der Überführ-Förderrichtung F zum Leergut-Leitelement 43 hin bewegt, das sich in der Leitposition L1 befindet, kontaktiert die Paneelfläche P1 und wird im Zusammenspiel der Transportbewegung des Förderbands 33 und einer Gleit- und/oder Abrollbewegung an der Paneelfläche P1 entlang dem Leergut-Leitelement 43 geleitet (d.h. in und quer zur Überführ-Förderrichtung F bewegt), geht im Bereich des hinteren Leitelement-Endabschnitts 47 von der Paneelfläche P1 außer Kontakt und wird durch die Transportbewegung des Förderbands 33 wieder in der Überführ-Förderrichtung 33 bewegt und in die erste Leergut-Sammelgasse 19 hinein transportiert, in welcher die Flasche mit anderen Flaschen gleichen Typ gesammelt wird. Ein Bewegungspfad eines anderen Flaschentyps in die zweite Leergut-Sammelgasse 21 hinein ist hierzu analog.

Die Figur 2 zeigt schematisch eine beispielhafte Leergut-Sortiereinrichtung 1 in einer Draufsicht, wobei sich diese Leergut-Sortiereinrichtung von der in der Figur 1 gezeigten dadurch unterscheidet, dass das Leergut-Leitelement 43 von der Leergut-Leiteinrichtung 41 linear und quer zur Überführ-Förderrichtung F (z.B. durch einen nicht gezeigten Elektromotor) verschiebbar ist, um die erste und die zweite Leitposition L1, L2 einzunehmen.

Zu diesem Zweck ist das Leergut-Leitelement 43 als ein V-förmiges Leergut-Leitelement ausgebildet, dessen beide Paneelflächen P1, P2 zum Kontaktieren und Leiten des Leerguts 11 an den Außenseiten der beiden V-Schenkel gebildet sind und sich senkrechet zur Tischfläche 5 erstrecken. Weiter sind die beiden Paneelflächen P1, P2 am vorderen Leitelement-Endabschnitt 45 miteinander verbunden und bilden eine stromaufwärts gerichtete Spitze des Leergut-Leitelements 43. Ein Winkel zwischen den beiden V-Schenkeln entspricht z.B. dem (den) Ablenk- bzw. Anprallwinkel(n) des schwenkbaren Leergut-Leitelements 43 der Ausführungsform von Figur 1, wenn es sich in der ersten oder der zweiten Leitposition L1, L2 befindet.

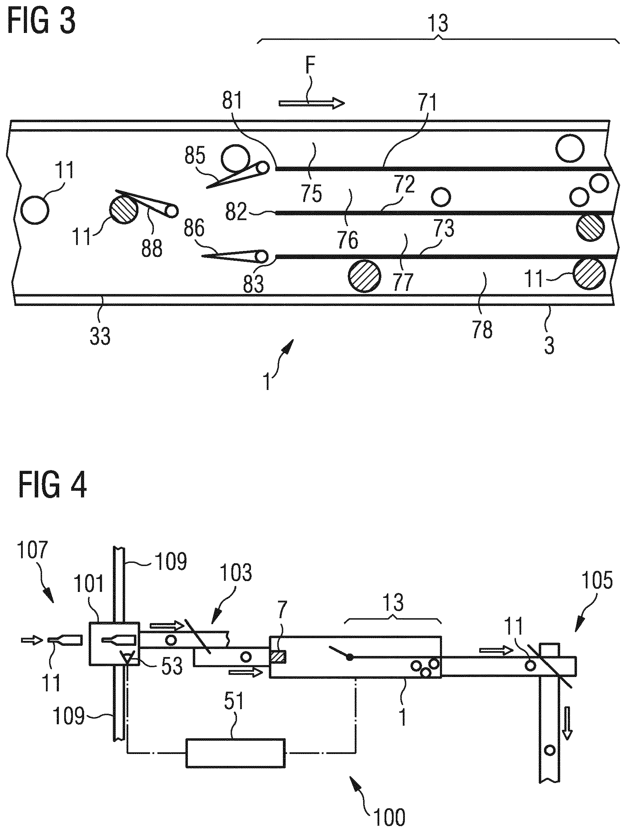

Die Figur 3 zeigt schematisch eine beispielhafte Leergut-Sortiereinrichtung in einer Draufsicht, wobei mehrere schwenkbare Leergut-Leitelemente, in diesem Fall z.B. drei, und mehrere Leergut-Sammelgassen, in diesem Fall z.B. vier, ausgeführt sind. Zum Zweck der Übersichtlichkeit zeigt die Figur 3 die Anordnung der Leergut-Leitelemente bezüglich der Leergut-Sammelgassen, wobei die im Zusammenhang mit der Figur 1 beschriebenen Komponenten der Leergut-Sortiereinrichtung 1 (z.B. der Leergut-Zuführabschnitt, die Unterdruckbereiche, etc.) ebenfalls vorgesehen sind oder sein können.

Die Leergut-Sortiereinrichtung 1 weist drei Abführabschnitt-Trennwände (erste bis dritte) 71, 72, 73 auf, welche sich in der Überführ-Förderrichtung F erstrecken und quer dazu gestaffelt auf der Tischfläche 5 angeordnet sind, um insgesamt vier Leergut-Sammelgassen (erste bis vierte) 75, 76, 77, 78 zu bilden. Die mittlere der drei Abführabschnitt-Trennwände 72 ist (zumindest im Wesentlichen) in einem mittleren Bereich des Förderbands 33 angeordnet, sodass sie zu dem stromaufwärts angeordneten Leergut-Zuführabschnitt (nicht gezeigt) korrespondiert. Jede der Abführabschnitt-Trennwände 71, 72, 73 hat einen vorderen Trennwand-Endabschnitt (erster bis dritter) 81, 82, 83, der in der Überführ-Förderrichtung F dem Leergut-Zuführabschnitt zugewandt ist, wobei ein erstes und ein zweites Leergut-Leitelement 85, 86 (welche im Zusammenhang mit der in der Figur 1 gezeigten Ausführungsform bereits erläutert worden sind) in der Überführ-Förderrichtung F stromaufwärts benachbart zum ersten bzw. zum dritten Trennwand-Endabschnitt 81, 83 angeordnet sind (die quer zur Überführ-Förderrichtung F die äußersten sind).

Weiter stromaufwärts bezüglich des ersten und des zweiten Leergut-Leitelements 85, 86 ist ein drittes Leergut-Leitelement 88 (z.B. gleichen Typs) angeordnet. Das dritte Leergut-Leitelement 88 ist zudem auf einer Linie zwischen dem zweiten Trennwand-Endabschnitt 82 und dem Leergut-Zuführabschnitt 7 angeordnet, d.h. das Leergut 11 wird vom Förderband 33 zum dritten Leergut-Leitelement 88 transportiert und vom dritten Leergut-Leitelement 88 selektiv zur zweiten oder dritten Leergut-Sammelgasse 76, 77 geleitet. Das zweite Leergut-Leitelement 85, welches stromabwärts des dritten Leergut-Leitelements 88 angeordnet ist, kann das Leergut 11, welches vom dritten Leergut-Leitelement 88 zur zweiten Leergut-Sammelpassage 76 geleitet wird, entweder passieren lassen (d.h. in die zweite Leergut-Sammelgasse 76 hinein) oder kann das Leergut 11 in die erste Leergut-Sammelgasse 75 leiten. Analog hierzu kann das zweite Leergut-Leitelement 86, welches stromabwärts des dritten Leergut-Leitelements 88 angeordnet ist, das Leergut 11, welches vom dritten Leergut-Leitelement 88 zur dritten Leergut-Sammelpassage 77 geleitet wird, entweder passieren lassen (d.h. in die dritte Leergut-Sammelgasse 77 hinein) oder kann das Leergut 11 in die vierte Leergut-Sammelgasse 78 leiten.

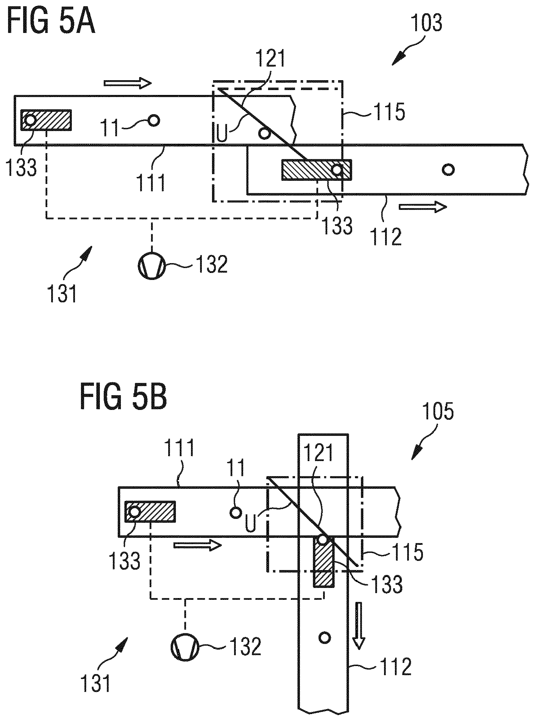

Die Figur 4 zeigt in einer Draufsicht schematisch ein Leergut-Rücknahmesystem 100 gemäß einer beispielhaften Ausführungsform, welches die vorhergehend beschriebene Leergut-Sortiereinrichtung 1, einen Leergutrücknahmeautomaten 101 und eine erste und eine zweite Leergut-Transporteinrichtung 103, 105 aufweist (weitere Details zum Leergutrücknahmeautomaten folgen weiter unten, ebenso wie zur ersten und zweiten Leergut-Fördereinrichtung 103, 105, welche im Zusammenhang mit den Figuren 5A und 5B erläutert sind). Der Leergutrücknahmeautomat 101 ist mit der ersten Leergut-Transporteinrichtung 103 verbunden und gibt Leergut 11, welches ihm eingegeben wird, an die erste Leergut-Transporteinrichtung 103 aus. Die erste Leergut-Transporteinrichtung 103 ist mit der Leergut-Sortiereinrichtung 1 verbunden und transportiert das Leergut 11 zum Leergut-Zuführabschnitt 7 der Leergut-Sortiereinrichtung 1. Die Leergut-Sortiereinrichtung 1 ist mittels ihres Leergut-Abführabschnitts 13 mit der zweiten Leergut-Transporteinrichtung 105 verbunden, welche in diesem Fall einen Typ Leergut von der Leergut-Sortiereinrichtung 1 empfängt und abtransportiert, beispielsweise zu einem Leergut-Sammelbehälter (nicht gezeigt). Die erste und die zweite Leergut-Transporteinrichtung 103, 105 können auch miteinander vertauscht angeordnet sein. Es ist ebenfalls möglich, dass mehrere Leergutrücknahmeautomaten über die erste oder weitere erste Leergut-Transporteinrichtung(en) mit der Leergut-Sortiereinrichtung 1 verbunden sind und dass weitere zweite Leergut-Transporteinrichtungen an die Leergut-Sortiereinrichtung 1 angeschlossen sind. Darüber hinaus ist es z.B. auch möglich, dass nur eine der ersten und der zweiten Leergut-Transporteinrichtung 103, 105 verwendet wird oder dass z.B. der Leergutrücknahmeautomat 101 direkt mit der Leergut-Sortiereinrichtung 1 verbunden ist.

Der Leergutrücknahmeautomat 101 ist in einem Automatenraum 107 einer Leergutrücknahmestelle (z.B. einem Super- oder Getränkemarkt) aufgestellt, sodass Verbraucher an einer Vorderseite des Leergutrücknahmeautomaten 101 Leergut 11 in diesen hinein einführen und somit zurückgeben können. Gewöhnlich ist der Leergutrücknahmeautomat 101 so aufgestellt, dass zumindest dessen Rückseite räumlich vom Automatenraum 107 getrennt ist, z.B. durch eine Wand 109. An der Rückseite des Leergutrücknahmeautomaten 101 (d.h. hinter der Wand 109) wird die Handhabung des Leerguts 11 durchgeführt, sodass Lärm und Gerüche durch die Leerguthandhabung vom Automatenraum 107 ferngehalten werden. Der Sensor 53 der Steuereinrichtung 51 zur Erfassung des Leerguttyps ist von einer Leergut-Erfassungseinrichtung (z.B. einer Kamera und/oder einem Barcodescanner) gebildet, welche im Leergutrücknahmeautomaten 101 angeordnet ist. Die Steuereinrichtung 51 weist weiter eine Datenbank auf, die mit der Steuereinrichtung 51 verbunden ist und in der Kenngrößen der verschiedenen Leerguttypen hinterlegt sind, mittels deren von der Steuereinrichtung 51 der Leerguttyp ermittelbar ist (z.B. durch Abgleich des von der Leergut-Erfassungseinrichtung erfassten Leerguttyps mit in der Datenbank hinterlegten Leerguttypen). Die Datenbank kann z.B. auch als Teil der Leergut-Erfassungseinrichtung ausgebildet sein oder kann z.B. dezentral bereitgestellt sein und mittels eines Netzwerks mit der Steuereinrichtung 51 verbunden sein (z.B. kann die Datenbank auf einem Server bereitgestellt sein und kann z.B. via Internet oder z.B. via eines Kommunikationsnetzwerks (z.B. LAN, WLAN, etc.) mit der Steuereinrichtung 51 verbunden sein).

Eine für das in der Figur 4 gezeigte Leergut-Rücknahmesystem 100 typische Handhabung von Leergut 11 (z.B. einer Flasche) nach der Rückgabe läuft wie folgt ab: die vom Verbraucher in den Leergutrücknameautoamten 101 eingegebene Flasche wird von der Leergut-Erfassungseinrichtung 53 erfasst (z.B. eine Flaschengröße, ein Flaschengewicht, eine Flaschengeometrie), ein Erkennungszeichen der Flasche, bspw. ein Barcode) und diesbezügliche Informationen werden zur Steuereinrichtung 51 übertragen, sodass diese unter Zuhilfenahme der Kenngrößen aus der Datenbank den Flaschentyp ermittelt. Nachfolgend wird die Flasche vom Leergutrücknahmeautomaten 101 ausgegeben und mittels der ersten Leergut-Transporteinrichtung 103 zur Leergut-Sortiereinrichtung 1 transportiert und an diese übergeben. In der Leergut-Sortiereinrichtung 1 wird die Flasche von der Steuerungsvorrichtung 51 gesteuert, z.B. anhand einer Häufigkeitsverteilung des zu sortierenden Leerguts, in eine zugehörige Leergut-Sammelgasse sortiert. Die in dieser Leergut-Sammelgasse gesammelten Flaschen (z.B. die am häufigsten auftretenden Flaschen im Leergut) werden anschließend an die zweite Leergut-Transporteinrichtung 105 übergeben und von dieser zum Leergut-Sammelbehälter (nicht gezeigt) transportiert, wohingegen die in anderen Leergut-Sammelgassen gesammelten Flaschentypen von Mitarbeitern der Leergutrücknahmestelle in Leergutkisten einsortiert werden.

Die Figuren 5A und 5B zeigen die erste bzw. die zweite Leergut-Transporteinrichtung 103, 105 aus der Figur 4 im Detail.

Die in der Figur 5A gezeigte erste Leergut-Transporteinrichtung 103 weist eine erste und eine zweite Leergut-Transportbahn auf, welche als Förderband 111, 112 ausgebildet sind, zueinander parallel verlaufen und in einem Leergut-Überführabschnitt 115 nebeneinander benachbart verlaufen und das Leergut 11 innerhalb des Leergut-Überführabschnitts 115 in die gleiche Bahn-Transportrichtung transportieren (stromabwärts des Überführabschnitts 115 können die Förderbänder z.B. in unterschiedliche Bahn-Transportrichtungen verlaufen). Das Leergut 11 ist an einem Ende auf einer Leergut-Transportfläche des ersten Förderbands 111 durch den Leergutrücknahmeautomaten 101 platzierbar, sodass ein Transport des Leerguts 11 auf dem ersten Förderband 111 zum Leergut-Überführabschnitt 115 erfolgt, in welchem das Leergut 11 selektiv gesteuert (z.B. von der Steuereinrichtung 51) auf das zweite Förderband 112 überführbar ist, welches das Leergut 11 zur Leergut-Sortiereinrichtung 1 transportiert (das erste Förderband 111 kann z.B. in seinem weiteren Verlauf mit einer weiteren Leergut-Sortiereinrichtung (nicht gezeigt) verbunden sein).

Weiter weist die erste Leergut-Transporteinrichtung 103 ein schwenkbares Umlenkelement 121 auf, welches im Bereich des Leergut-Überführabschnitts 115 (in der Figur 5A punktstrichliert dargestellt) angeordnet ist und mit einer Umlenkleitfläche U zum Kontaktieren und Umlenken des Leerguts 11 vom ersten zum zweiten Förderband 111, 112 ausgebildet ist. Das Umlenkelement 121 ist (z.B. von der Steuereinrichtung 51) selektiv in den Bereich des Leergut-Überführabschnitts 115 einschwenkbar (eine Nicht-Eingeschwenkt-Stellung ist in der Figur 5A strichliert dargestellt). Die Umlenkleitfläche U ist im Wesentlichen senkrecht zur Transportfläche des ersten und des zweiten Förderbands 111, 112 orientiert und erstreckt sich vom ersten Förderband 111 zum zweiten Förderband 112 unter Ausbildung eines Winkels zur Bahn-Transportrichtung des ersten Förderbands 111. Allgemein ähnelt das Umlenkelement 121 in seiner Funktionsweise dem Leergut-Leitelement 43 der Leergut-Sortiereinrichtung 1.

Zudem weist die erste Leergut-Transporteinrichtung 103 eine Unterdruckbereitstellungsvorrichtung 131 in Gestalt einer Unterdruckpumpe 132 auf, welche einen Unterdruck erzeugt. Der Unterdruck wirkt über eine Unterdruckglocke (nicht gezeigt; der Bereich, in welchem der Unterdruck bereitstellbar ist, ist mit dem Bezugszeichen 133 gekennzeichnet), die benachbart zum Umlenkelement 121 bereitgestellt ist, durch das zweite Förderband 112 (welche z.B. perforiert ist) hindurch auf das darauf transportierte Leergut 11, um das Leergut 11 in Richtung zur Leergut-Transportfläche des zweiten Förderbands 112 hin anzusaugen. Zudem kann die Unterdruckbereitstellungsvorrichtung 131 auch im Bereich des ersten Förderbands 111 einen Unterdruck (siehe Bezugszeichen 133) bereitstellen, in welchem Bereich das Leergut 11 auf das erste Förderband 111 aufgegeben wird. Die hier verwendete Unterdruckbereitstellungsvorrichtung ist z.B. in Gestalt und Funktion analog zur Unterdruckerzeugungsvorrichtung 61 der Leergut-Sortiereinrichtung 1 ausgebildet.

Die in der Figur 5B gezeigte zweite Leergut-Transporteinrichtung 105 weist eine ähnliche Struktur wie die in der Figur 5A beschriebene erste Leergut-Transporteinrichtung 103 auf, jedoch mit dem Unterschied, dass sich das erste und das zweite Förderband 111, 112 kreuzen (in diesem Fall unterquert das zweite Förderband 112 das erste Förderband 111 in einem rechten Winkel zu dessen Bahn-Transportrichtung, wobei die zugehörigen Leergut-Transportflächen einen minimalen Abstand zueinander haben, d.h. die Leergut-Transportflächen sind nur durch die Dicke der Förderbänder voneinander separiert; z.B. sind auch andere Kreuzungswinkel als ein rechter Winkel möglich). Weiter ist bei der zweiten Leergut-Transporteinrichtung 105 das Umlenkelement 121 stationär im Bereich des Leergut-Überführabschnitts 115 ausgebildet (jedoch ist auch ein wie bei der ersten Leergut-Transporteinrichtung verwendetes schwenkbares Umlenkelement möglich, und umgekehrt).

## Patentansprüche

1. Leergut-Sortiereinrichtung (1) zur automatischen Sortierung von Leergut (11), aufweisend:
• einen Leergut-Sortiertisch (3) mit einer Tischfläche (5), einem Leergut-Zuführabschnitt (7), dem Leergut (11) unterschiedlichen Leerguttyps zuführbar ist, und einem Leergut-Abführabschnitt (13), wobei der Leergut-Abführabschnitt (13) eine Abführabschnitt-Unterteileinrichtung (15) mit wenigstens einer Abführabschnitt-Trennwand (17) aufweist, von welcher der Leergut-Abführabschnitt (13) in wenigstens eine erste und eine zweite Leergut-Sammelgasse (19, 21; 75, 76, 77, 78) unterteilt ist, die durch die wenigstens eine Abführabschnitt-Trennwand (17; 71, 72, 73) voneinander getrennt sind,
• eine Leergut-Fördereinrichtung (33), welche an dem Leergut-Sortiertisch (1) installiert ist und welche sich zwischen dem Leergut-Zuführabschnitt (7) und dem Leergut-Abführabschnitt (13) erstreckt und welche derart ausgebildet ist, dass von der Leergut-Fördereinrichtung (33) das dem Leergut-Zuführabschnitt (7) zugeführte Leergut (11) von dem Leergut-Zuführabschnitt (7) zu dem Leergut-Abführabschnitt (13) entlang einer Überführ-Förderrichtung (F) überführbar ist,
• eine Leergut-Leiteinrichtung (41) mit einem bewegbaren Leergut-Leitelement (43; 85, 86, 88), welches bezüglich der Überführ-Förderrichtung (F) stromaufwärts der Leergut-Sammelgassen (19, 21; 75, 76, 77, 78) an dem Leergut-Sortiertisch (3) angeordnet ist und welches zumindest in eine erste Leitposition (L1), die der ersten Leergut-Sammelgasse (19) zugeordnet ist, und eine zweite Leitposition (L2), die der zweiten Leergut-Sammelgasse (21) zugeordnet ist, bewegbar ausgebildet ist, um das mittels der Leergut-Fördereinrichtung (33) auf dem Leergut-Sortiertisch (3) in die Überführ-Förderrichtung (F) geförderte Leergut (11) selektiv der ersten und der zweiten Leergut-Sammelgasse (19, 21) zuzuleiten, und
• eine Steuereinrichtung (51), welche einen Sensor (53) aufweist, mittels dessen der jeweilige Leerguttyp des dem Leergut-Zuführabschnitt (7) zugeführten Leerguts (11) automatisch erfassbar ist, und welche mit der Leergut-Leiteinrichtung (41) verbunden ist und welche derart eingerichtet ist, um die Bewegung des Leergut-Leitelements (43; 85, 86, 88) in dessen erste und zweite Leitposition (L1, L2) in Abhängigkeit von dem erfassten Leerguttyp zu steuern, um dadurch das Leergut (11) Leerguttyp-zugeordnet selektiv der ersten Leergut-Sammelgasse (19) und der zweite Leergut-Sammelgasse (21) zuzuleiten,
• wobei die Abführabschnitt-Trennwand (17; 71, 72, 73) zwischen den Leergut-Sammelgassen (19, 21; 75, 76, 77, 78) parallel zur Tischfläche (5) durch die Steuereinrichtung (51) gesteuert bewegbar ist, sodass eine zugeordnete Leergut-Sammelgassengröße variierbar ist.

2. Leergut-Sortiereinrichtung gemäß Anspruch 1, wobei das Leergut-Leitelement (43; 85, 86, 88) als ein Paneel mit einander gegenüberliegenden Paneelflächen (P1, P2) ausgebildet ist, die sich zumindest im Wesentlichen senkrechet zur Tischfläche (5) erstrecken und welche als Leergut-Leitflächen zum Kontaktieren und Leiten des Leerguts dienen, wobei das Paneel mit seinen Paneelflächen (P1, P2) zumindest im Wesentlichen quer zur Überführ-Förderrichtung (F) bewegbar ist.

3. Leergut-Sortiereinrichtung (1) gemäß Anspruch 1 oder 2, wobei das Leergut-Leitelement (43; 85, 86, 88) in einer Draufsicht auf die Tischfläche (5) gesehen langgestreckt mit einem dem Leergut-Zuführabschnitt zugewandten, vorderen Leitelement-Endabschnitt (45) und einem dem Leergut-Abführabschnitt zugewandten, hinteren Leitelement-Endabschnitt (47) ausgebildet ist.

4. Leergut-Sortiereinrichtung (1) gemäß irgendeinem der vorhergehenden Ansprüche, wobei das Leergut-Leitelement (43; 85, 86, 88) um eine Schwenkachse (A), die sich zumindest im Wesentlichen senkrecht zur Tischfläche (5) erstreckt, schwenkbar angebracht ist, womit das Leergut-Leitelement (43; 85, 86, 88) in eine der ersten Leitposition (L1) zugehörige Schwenkposition und in eine der zweiten Leitposition (L2) zugehörige Schwenkposition schwenkbar ist.

5. Leergut-Sortiereinrichtung (1) gemäß Anspruch 3 und 4, wobei die Schwenkachse (A) in einem Abstand vom vorderen Leitelement-Endabschnitt (45) und zwischen dem vorderen Leitelement-Endabschnitt (45) und dem hinteren Leitelement-Endabschnitt (47), optional benachbart zu und/oder in dem hinteren Leitelement-Endabschnitt (47), angeordnet ist.

6. Leergut-Sortiereinrichtung (1) gemäß irgendeinem der Ansprüche 1 bis 3, wobei die Leergut-Leiteinrichtung (41) eingerichtet ist, um das Leergut-Leitelement (43; 85, 86, 88) in einer Richtung parallel zur Tischfläche (5) linear zu bewegen, um das Leergut-Leitelement (43; 85, 86, 88) in die erste und die zweite Leitposition (L1, L2) zu bewegen.

7. Leergut-Sortiereinrichtung (1) gemäß irgendeinem der vorhergehenden Ansprüche, wobei mehrere Leergut-Sammelgassen (75, 76, 77, 78) im Leergut-Abführabschnitt (13) benachbart zueinander ausgebildet sind und durch zugehörige Abführabschnitt-Trennwände (71, 72, 73), von welchen jeweils eine Abführabschnitt-Trennwand (71, 72, 73) zwischen zwei benachbarten Leergut-Sammelgassen (75, 76, 77, 78) ausgebildet ist, voneinander getrennt sind.

8. Leergut-Sortiereinrichtung (1) gemäß irgendeinem der vorhergehenden Ansprüche, wobei die Leergut-Leiteinrichtung (41) mehrere Leergut-Leitelemente (43; 85, 86, 88) aufweist.

9. Leergut-Sortiereinrichtung (1) gemäß Ansprüchen 7 und 8, wobei jede der Abführabschnitt-Trennwände (71, 72, 73) einen vorderen Trennwand-Endabschnitt aufweist (81, 82, 83), der in der Überführ-Förderrichtung (F) dem Leergut-Zuführabschnitt (7) zugewandt ist, wobei eine erste Anzahl von Leergut-Leitelementen (85, 86) in der Überführ-Förderrichtung (F) stromaufwärts benachbart zu dem oder den vorderen Trennwand-Endabschnitten (81, 82, 83) einer Anzahl von Abführabschnitt-Trennwänden (71, 72, 73) angeordnet ist, und wobei optional die erste Anzahl von Leergut-Leitelementen (85, 86, 88) gleich der Anzahl von Abführabschnitt-Trennwänden (71, 72, 73) ist.

10. Leergut-Sortiereinrichtung (1) gemäß Anspruch 9, wobei bezüglich der Überführ-Förderrichtung (F) stromaufwärts der ersten Anzahl von Leergut-Leitelementen (85, 86) eine zweite Anzahl von Leergut-Leitelementen (88) angeordnet ist, wobei optional die zweite Anzahl von Leergut-Leitelementen, quer zur Überführ-Förderrichtung (F) gesehen, zwischen seitlich äußersten Leergut-Leitelementen angeordnet ist.

11. Leergut-Sortiereinrichtung (1) gemäß irgendeinem der vorhergehenden Ansprüche, wobei im Leergut-Zuführabschnitt (7) und/oder in einem Bereich (63) benachbart zu dem Leergut-Leitelement (41; 85, 86, 88) eine Unterdruckerzeugungsvorrichtung (62) bereitgestellt ist, von welcher ein Unterdruck erzeugbar ist, der durch die Leergut-Fördereinrichtung (33) hindurch auf das darauf transportierte Leergut (11) wirkt, um das Leergut (11) in Richtung zur Tischfläche (5) hin anzusaugen.

12. Leergut-Rücknahmesystem (100) mit
• einer Leergut-Sortiereinrichtung (1) gemäß irgendeinem der vorhergehenden Ansprüche, und
• einem Leergutrücknahmeautomaten (101), in welchen hinein manuell Leergut (11) eingebbar ist und von welchem das eingegebene Leergut (11) zum dem Leergut-Zuführabschnitt (7) des Leergut-Sortiertischs (3) hin automatisch zuführbar ist.

13. Leergut-Rücknahmesystem (100) gemäß Anspruch 12, wobei der Sensor (53) der Leergut-Sortiereinrichtung (1) zur Erfassung des Leerguttyps von einer Leergut-Erfassungseinrichtung gebildet ist, welche im Leergutrücknahmeautomaten (101) angeordnet ist.

14. Leergut-Rücknahmesystem (100) gemäß Anspruch 12 oder 13, ferner mit einer Datenbank, die mit der Steuereinrichtung (51) verbunden ist und/oder verbindbar ist und in der Kenngrößen der verschiedenen Leerguttypen hinterlegt sind, mittels deren von der Steuereinrichtung (51) der Leerguttyp ermittelbar ist.

15. Leergut-Rücknahmesystem gemäß irgendeinem der Ansprüche 12 bis 14, ferner mit einer Leergut-Transporteinrichtung (103, 105), die zwischen dem Leergutrücknahmeautomaten (101) und dem Leergut-Zuführabschnitt (7) des Leergut-Sortiertischs (3) und/oder zwischen dem Leergut-Abführabschnitt (13) des Leergut-Sortiertischs (3) und einer Leergut-Sammeleinrichtung angeordnet ist, um das Leergut (11) vom Leergutrücknahmeautomaten (101) zum Leergut-Sortiertisch (3) und/oder vom Leergut-Sortiertisch (3) zur Leergut-Sammeleinrichtung automatisch zu transportieren, wobei die Leergut-Transporteinrichtung (103, 105) aufweist:
• zumindest eine erste und eine zweite Leergut-Transportbahn (111, 112) zum Transport des Leerguts (11) entlang einer jeweiligen Bahn-Transportrichtung, welche jeweils eine Leergut-Transportfläche aufweisen, auf welcher das Leergut (11) transportierbar ist, wobei ein Leergut-Überführabschnitt (115) zwischen der ersten und der zweiten Transportbahn (111, 112) ausgebildet ist, über welchen Leergut (11) von der ersten zu der zweiten Transportbahn (111, 112) überführbar ist,
• ein stationäres oder von der Steuereinrichtung (51) gesteuert bewegbares Umlenkelement (121), welches im Bereich des Leergut-Überführabschnitts (115) angeordnet ist und mit einer Umlenkleitfläche (U) zum Kontaktieren und Umlenken des Leerguts (11) von der ersten zu der zweiten Transportbahn (111, 112) ausgebildet ist, und
• eine Unterdruckbereitstellungsvorrichtung (131), welche benachbart zum Umlenkelement (121) angeordnet ist und von welcher ein Unterdruck erzeugbar ist, der durch die zweite Transportbahn (112) hindurch auf das darauf transportierte Leergut (11) wirkt, um das Leergut (11) in Richtung zur Leergut-Transportfläche der zweiten Transportbahn (112) hin anzusaugen.
